# EUROPEAN PATENT APPLICATION

(11) **EP 4 821 727 A1**
(43) Date of publication of application: **14.10.2026**
(21) Application number: 26161201.4
(22) Date of filing: 27.02.2026
(51) Int. Cl.: B60K 7/00, B60K 17/04, F16H 57/04, H02K 9/19

(54) **OIL- AND AIR-COOLING SYSTEM**

(30) Priority: 10.04.2025 KR 20250046505
(71) Applicant: Hyundai Mobis Co., Ltd., Gangnam-gu Seoul 06141 (KR)
(72) Inventor: KIM, Sang Woo, 16891 Yongin-si, Gyeonggi-do (KR)
(74) Representative: Jung, Minkyu

(57) **Abstract**

Systems, methods, techniques, and other embodiments are disclosed with regard to an oil circulation structure. The system includes a motor configured to generate power to rotate a drive shaft, a gear configured to transmit the power of the motor to a wheel, a motor housing into which the motor and the gear are inserted and in which cooling oil is stored and an air-cooling assembly which is provided within the motor housing and in which a predetermined heat exchange surface is shared with one surface of the motor housing and heat-exchanges with external air on the heat exchange surface.

## Description

### BACKGROUND OF THE DISCLOSURE

### Field of the Disclosure

The present disclosure relates to a cooling system, and more specifically, to an oil- and water-cooling system applied to an in-wheel system and capable of efficiently cooling a motor and a reducer.

### Description of the Related Art

A cooling system is essential to continuously maintain the performance and safety of a vehicle drive system, and generally, the cooling systems are classified into three types depending on a cooling medium and structure, that is, air-cooling, water-cooling, and oil-cooling systems. Among these, the conventional air-cooling system dissipates heat using a flow of external air and dissipates heat by bringing a surface of a housing exposed to the outside into contact with air. The air-cooling system exhibits a characteristic in which the amount of air contact and cooling rate increase in proportion to vehicle speed. In addition, the conventional water-cooling system absorbs heat using coolant and dissipates heat through a heat-dissipating device, and a designated channel shape and route through which the coolant flows are present in the housing, absorbing heat of a heat generator through cooling channels. In this case, the heated coolant circulates along the channels after entering cooling and heat-dissipating devices and cooled. In addition, the conventional oil-cooling system absorbs heat using oil and dissipates the heat via a heat-dissipating device, and the oil directly reaches a housing and functional parts inside the housing and simultaneously provides both cooling and lubrication. The heated oil circulates along a designated channel after cooled through the cooling and heat-dissipating devices.

However, in the conventional air-cooling, water-cooling, and oil-cooling systems, the air-cooling system exhibits low cooling performance, particularly under low-speed or high-temperature conditions, such as during summer, the water-cooling and oil-cooling systems require additional components to form separate channels and circuits for forming coolant and oil channels, water pumps, and cooling circuits for moving coolant, and in the water-cooling system, direct cooling of major functional parts of a drive system is not possible, which results in reduced packaging inefficiency, reduced maintainability, and increased design complexity due to the housing reflecting the cooling channels and circuits. In addition, for the oil-cooling system, additional issues include maintenance and replacement of oil and associated parts, as well as performance variations depending on the oil properties at different temperatures.

Considering the above advantages and disadvantages, conventional vehicle drive systems have adopted the oil-cooling or water-cooling system, but as described above, these systems have poor packaging efficiency, making it difficult to compactly integrate the system, and thus are unsuitable for in-wheel systems in which a motor and a reducer are inserted into a wheel. More specifically, as the space in which the conventional drive system is mounted shifts from the vehicle engine room to within the wheel, the basic packaging configuration, which includes the motor, the reducer, and coolant or oil channels, cannot exceed the inner diameter of the wheel and needs to avoid interference with steering and chassis structures surrounding the wheel, but the configuration of a conventional PE system fails to meet these requirements when applied to the in-wheel system.

In addition, when the conventional oil-cooling or water-cooling systems is applied to the in-wheel system, the structural increase per wheel leads to an increase in the unsprung mass of the vehicle, thereby reducing ride comfort, handling performance, and suspension efficiency.

### Documents of Related Art

[Patent Document 1] Korean Laid-Open Patent No. 10-2014-0062538, "in-wheel motor system" (published on May 26, 2024)

### SUMMARY OF THE DISCLOSURE

The present disclosure is directed to providing an oil- and air-cooling system that employs a combination of oil- and air-cooling methods to complement cooling performance while ensuring packaging efficiency.

More specifically, the present disclosure is directed to providing an oil- and air-cooling system, which implements an oil circulation structure that, without the use of a separate pump or structure, transfers oil upward through gear churning, allows the oil to be cooled by air at the top, and then recirculates the cooled oil back to the bottom of a gear, thereby achieving high cooling performance and ensuring packaging efficiency and reducing manufacturing costs with a simplified structure, and implements speed-dependent flow rate control, thereby reducing efficiency losses due to churning in high-speed ranges.

According to one embodiment of the present disclosure, there is provided an oil- and air-cooling system including a motor configured to generate power to rotate a drive shaft, a gear configured to transmit the power of the motor to a wheel, a motor housing into which the motor and the gear are inserted and in which cooling oil is stored, and an air-cooling assembly which is provided within the motor housing and in which a predetermined heat exchange surface is shared with one surface of the motor housing and heat-exchanges with external air on the heat exchange surface.

In addition, the motor housing may include a drive module accommodation housing in which the motor and the gear are inserted into a lower end portion thereof and in which the cooling oil is stored, the gear may churn the cooling oil stored within the drive module accommodation housing toward the air-cooling assembly, and the air-cooling assembly may include an oil tray which is provided in contact with one inner wall of the motor housing, includes a predetermined internal mounting space, and in which the oil churned by the gear is stored.

In addition, the oil tray may be provided on an upper end of the drive module accommodation housing, the heat exchange surface may be an upper surface of the motor housing, and the air-cooling assembly may include an oil collection hole formed to pass through one surface of the oil tray rather than the heat exchange surface.

In addition, the oil collection hole may be formed at a position corresponding to an edge of a compound gear included in the gear, and the oil tray may be formed on both sides of an input gear included in the gear.

In addition, the oil tray may be formed such that a lower end comes into contact with an upper end of the compound gear.

In addition, the oil collection hole may be formed at a position corresponding to an edge of an output gear included in the gear, and the oil tray may be formed on both sides of an input gear included in the gear.

In addition, the oil tray may be formed such that a lower end comes into contact with an upper end of the output gear.

In addition, the air-cooling assembly may further include a drain hole formed to pass through one surface of the oil tray rather than the heat exchange surface and the surface in which the oil collection hole is formed.

In addition, the motor housing may further include an oil drop channel communicating with the drain hole at the rear of the drive module accommodation housing, and a lower end of the oil drop channel may communicate with the drive module accommodation housing.

In addition, area A of the heat exchange surface may conform to the following Equations 1 to 3:
Equation 1: ${Q}_{air} = hA \left({T}_{motor}-{T}_{air}\right)$
Equation 2: ${Q}_{oil} = {mC}_{p} \left({T}_{motor}-{T}_{oil}\right)$
Equation 3: ${Q}_{air} \geq {Q}_{oil}$
wherein *Qₐᵢᵣ* denotes heat exchange capacity when air-cooled, *Qₒᵢₗ* denotes heat exchange capacity when oil-cooled, h denotes a heat transfer coefficient, A denotes an area of a heat exchange surface, *Tₘₒₜₒᵣ* denotes a temperature of a motor or a gear, *T*_{*ai*r} denotes air temperature, *Tₒᵢₗ* denotes cooling oil temperature, m denotes mass of the motor or gear immersed in cooling oil, and *Cₚ* denotes specific heat of the motor or the gear.

### BRIEF DESCRIPTION OF THE DRAWINGS

FIG. 1 is a plan view illustrating an in-wheel system to which an oil- and air-cooling system of the present disclosure is applied.
FIG. 2 is a schematic diagram illustrating a cooling method of the oil- and air-cooling system of the present disclosure.
FIGS. 3 and 4 are schematic diagrams illustrating a structure of the oil- and air-cooling system of the present disclosure.
FIG. 5 is a schematic diagram illustrating an oil tray according to a first embodiment of the present disclosure.
FIG. 6 is a plan view illustrating positions of oil collection holes in an oil tray according to a second embodiment of the present disclosure.
FIG. 7 is a schematic diagram illustrating the oil tray according to the second embodiment of the present disclosure.

### DETAILED DESCRIPTION OF THE DISCLOSURE

Hereinafter, the technical spirit of the present disclosure will be described in more detail with reference to the accompanying drawings. Prior to the description, terms or words used in the present specification and claims should not be interpreted as limited to their usual or dictionary meanings and should be interpreted as meanings and concepts that conform to the technical idea of the present disclosure based on the principle that the inventor can appropriately define the concepts of the terms in order to describe his or her own disclosure in the best way.

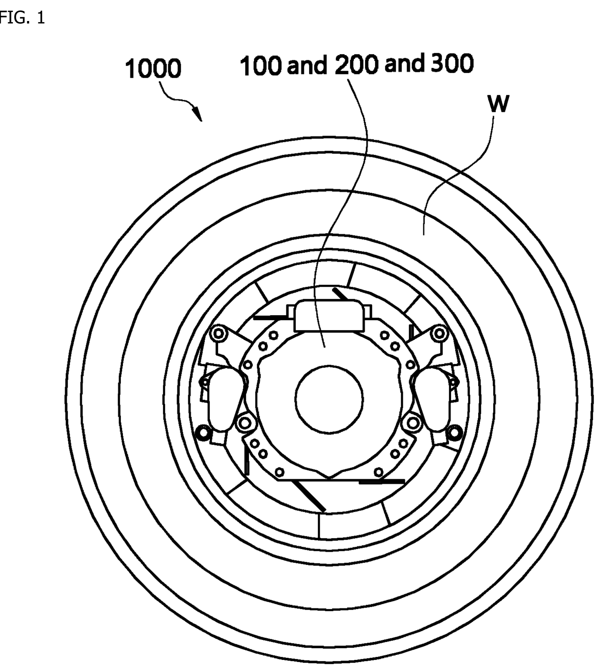

Hereinafter, a basic configuration of an oil- and air-cooling system 1000 of the present disclosure will be described with reference to FIGS. 1 to 3.

As illustrated in FIG. 1, the oil- and air-cooling system 1000 of the present disclosure may include a motor 100 for generating power to rotate a drive shaft, a gear 200 for reducing a speed of the motor 100 to increase torque and transmitting the power of the motor 100 to a wheel W, and a motor housing 300 into which the motor 100 and the gear 200 are inserted and cooling oil O is stored at the bottom, and the motor 100, the gear 200, and the motor housing 300 may be inserted into the wheel W of a vehicle. This may be applied to all wheels W of a vehicle to which the oil- and air-cooling system 1000 of the present disclosure is applied, enabling individual driving of each wheel W and maximizing the use of an indoor space by eliminating the need to position the motor 100 inside an engine room of the vehicle. In some embodiments, the gear 200 may be referred to as a gear.

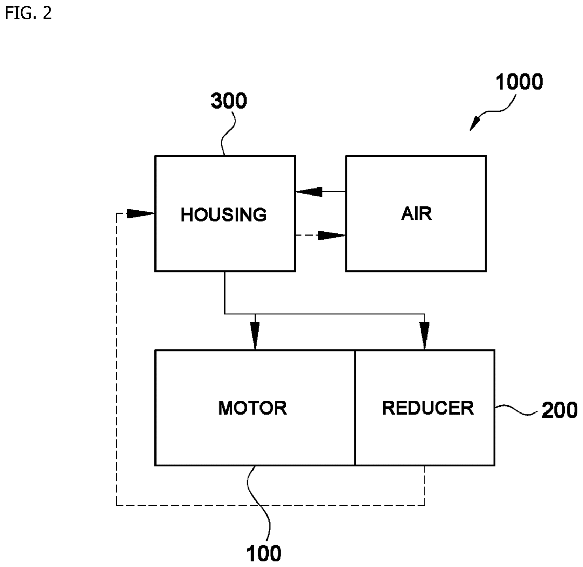

In addition, as illustrated in FIG. 2, the oil- and air-cooling system 1000 of the present disclosure may include an air-cooling assembly 400 which is provided inside the motor housing 300 and in which a predetermined heat exchange surface 410 is shared with one surface of the motor housing 300 to heat-exchange with external air on the heat exchange surface 410. In Figure 2, solid arrows indicate the cooling direction, while dashed arrows indicate the heating direction. That is, the oil-and air-cooling system 1000 of the present disclosure may adopt both an oil-cooling method in which cooling oil O stored inside the motor housing 300 is cooled in a direct contact with the gear 200 and the motor 100, and an air-cooling method in which the cooling oil O stored inside the motor housing 300 is cooled by heat-exchanging with external air on the heat exchange surface 410 of the motor housing 300. In some embodiments, the air-cooling assembly 400 may be referred to as a air-cooling assembly.

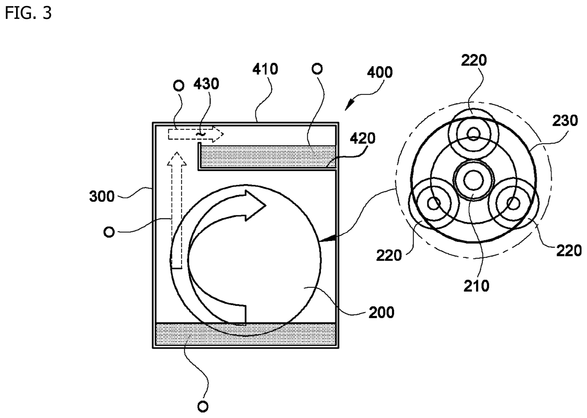

In this case, as illustrated in FIG. 3, the cooling oil O may flow only within an internal space of the motor housing 300, and the power driving the cooling oil O may be derived from the rotation of gears included in the gear 200. That is, the cooling oil O may be circulated within the motor housing 300 by churning the gears. Accordingly, cooling and lubrication of the internal gear 200 and motor 100 can be achieved without the cooling oil O flowing into or discharged from the motor housing 300. That is, a circulation cycle of the cooling oil O may be implemented without an oil pump or an external heat exchanger. Accordingly, the oil- and air-cooling system 1000 of the present disclosure has higher cooling performance than the conventional air-cooling system and implements a simpler structure compared to the conventional oil-cooling system, thereby ensuring packaging efficiency and reducing manufacturing costs.

In addition, by employing the above structure, the oil- and air-cooling system 1000 of the present disclosure may increase the churning amount of cooling oil O as the speed of the motor 100 increases, that is, as heat generation increases, the rotational speed of the gear also increases, thereby naturally accelerating a cooling rate. It is possible to significantly reduce efficiency losses due to churning in the high-speed region.

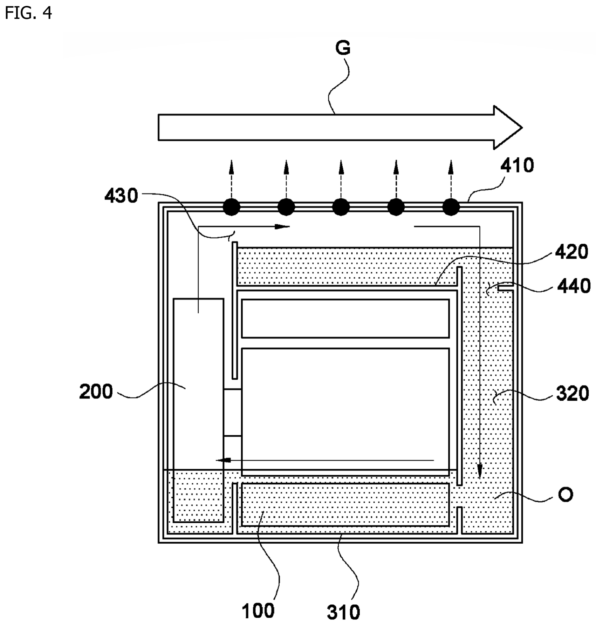

Hereinafter, an oil tray 420 of the present disclosure will be described in more detail with reference to FIG. 4.

In addition, as illustrated in FIG. 4, the motor housing 300 may include a drive module accommodation housing 310 in which the motor 100 and the gear 200 are inserted into a lower end portion thereof and the cooling oil O is stored, and the gear 200 may churn the cooling oil O stored in the drive module accommodation housing 310 toward the air-cooling assembly 400. In Figure 4, solid arrows indicate the flow direction of the cooling oil, while dashed arrows indicate the heat dissipation direction when air-cooled. In this case, the air-cooling assembly 400 may include the oil tray 420 which is provided in contact with one inner wall of the motor housing 300 and includes a predetermined internal mounting space and on which oil churned by the gear 200 is mounted. The oil tray 420 may be provided on an upper end of the drive module accommodation housing 310 and designed such that the oil churned by the gear 200 flows toward the oil tray 420, and in this case, the heat exchange surface 410 may be an upper surface of the motor housing 300. In addition, the air-cooling assembly 400 may include oil collection holes 430 formed to pass through one surface of the oil tray 420 rather than the heat exchange surface 410. After the cooling oil O may be churned by the gear 200 and scattered into the motor housing 300, some cooling oil O may be transferred into the oil tray 420 through the oil collection holes. More specifically, the oil collection holes 430 may be formed to pass through a surface in which the drive module accommodation housing 310 having the gear 200 comes into contact with the oil tray 420. In some embodiments, the drive module accommodation housing 310 may be referred to as a drive module accommodation housing.

In addition, the air-cooling assembly 400 may further include a drain hole 440 formed to pass through a surface of the oil tray 420 rather than the surface in which the heat exchange surface 410 and the oil collection hole 430 are formed, and the motor housing 300 may further include an oil drop channel 320 communicating with the drain hole 440 at the rear of the drive module accommodation housing 310. In this case, a lower end of the oil drop channel 320 may communicate with the drive module accommodation housing 310 so that the oil dropping after cooling may be introduced back into the drive module accommodation housing 310, thereby allowing the cooling oil O to circulate within the motor housing 300. In this case, the motor housing 300 may be formed to be a predetermined distance larger in an axial direction than the sizes of the motor 100 and the gear 200 so that the oil drop channel 320 through which the cooling oil O may drop from the oil tray 420 is provided at the rear of the drive module accommodation housing 310.

In addition, the drain hole 440 and the oil collection hole 430 may be formed in the opposite side of the oil tray 420. More specifically, the oil tray 420 has the oil collection hole 430 formed in one end thereof in the axial direction to communicate with the drive module accommodation housing 310 in which the gear 200 is positioned, and the drain hole 440 may be formed on the other end in the axial direction to transfer the cooling oil O to the rear of the motor 100 in the axial direction. Accordingly, the cooling oil O may flow into the oil tray 420 and moves in the axial direction, thereby being air-cooled and sufficiently cooled. Thereafter, the cooling oil O may be transferred to the oil drop channel 320 and introduced back into the drive module accommodation housing 310.

In addition, the motor housing 300 may be designed such that area A of the heat exchange surface 410 conforms to the following Equations 1 to 3. Equation 1: ${Q}_{air} = hA \left({T}_{motor}-{T}_{air}\right)$ Equation 2: ${Q}_{oil} = {mC}_{p} \left({T}_{motor}-{T}_{oil}\right)$ Equation 3: ${Q}_{air} \geq {Q}_{oil}$
(where *Qₐᵢᵣ* denotes heat exchange capacity when air-cooled, *Qₒᵢₗ* denotes heat exchange capacity when oil-cooled, h denotes a heat transfer coefficient,

A denotes an area of a heat exchange surface, *Tₘₒₜₒᵣ* denotes a temperature of a motor or a gear, *Tₐᵢᵣ* denotes air temperature, *Tₒᵢₗ* denotes cooling oil temperature, m denotes mass of the motor or gear immersed in cooling oil, and *Cₚ* denotes specific heat of the motor or the gear)

That is, by designing the heat exchange capacity by oil cooling to be equal to or greater than the heat exchange capacity by air cooling, the cooling oil O that absorbs the heat of the gear 200 and the motor 100 can be smoothly air-cooled, thereby dissipating all the heat of the gear 200 and the motor 100 to the outside. Furthermore, in addition to the above equations, the design of the motor housing 300 may comprehensively set a target value in further consideration of ambient temperature, an air contact flow rate due to the speed of the vehicle, etc.

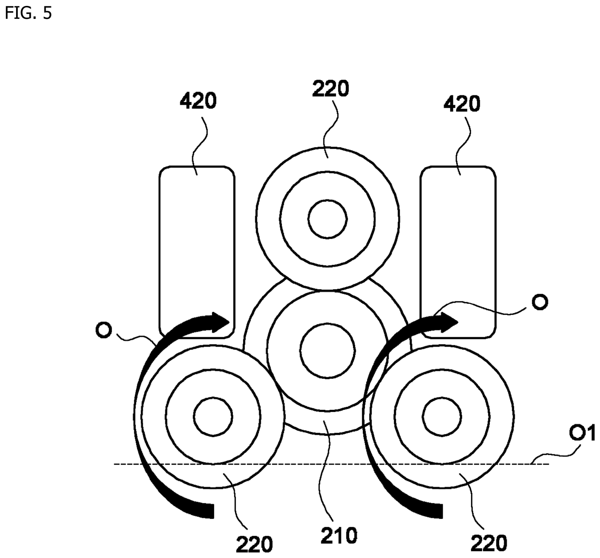

Hereinafter, the oil tray 420 according to an embodiment of the present disclosure will be described in more detail with reference to FIGS. 5 to 7.

In the oil tray 420 of the first embodiment of the present disclosure, the oil collection holes 430 may be formed at positions corresponding to an edge of a compound gear 220 included in the gear 200. In this case, as illustrated in FIG. 5, the oil tray 420 may be formed on both sides of an input gear 210 included in the gear 200. In addition, the oil tray 420 may be formed such that a lower end comes into contact with an upper end of the compound gear 220. Accordingly, the cooling oil O churned from the compound gear 220 may flow into the oil tray 420. In this case, in consideration of rotation and movement regions of the compound gear 220, a flow rate of the cooling oil O inside the motor housing 300 may be adjusted, and the structure of the motor housing 300 may be designed so that a water surface level of the cooling oil O is positioned below the center of the compound gear 220 when the motor 100 is stopped.

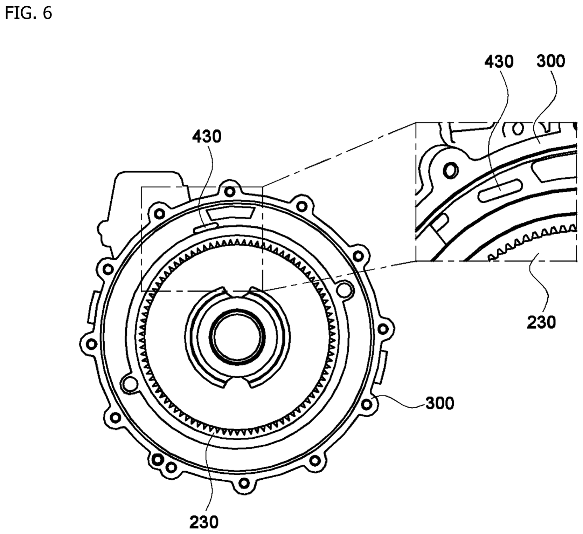

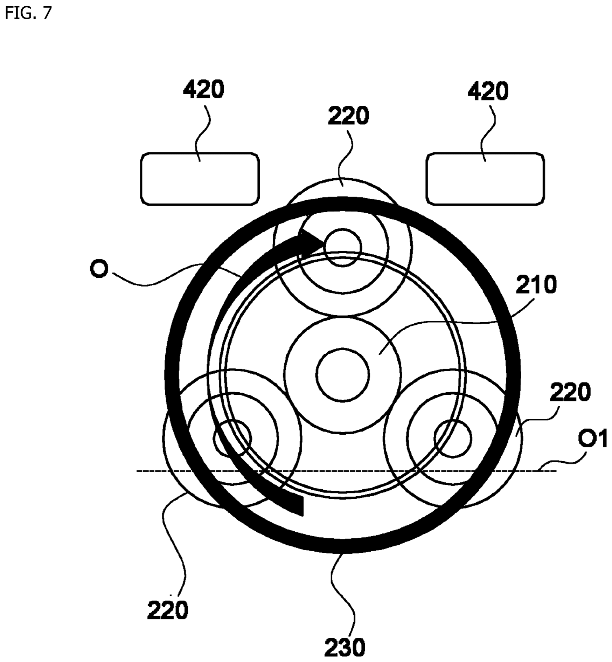

In addition, as illustrated in FIG. 6, in the oil tray 420 according to a second embodiment, the oil collection holes 430 may be formed at positions corresponding to an edge of an output gear 230, that is, the internal gear, included in the gear 200. This may be applied to a structure in which the gear 200 of the present disclosure uses the internal gear. In this case, as illustrated in FIG. 7, the oil tray 420 may be formed on both sides of an input gear 210 included in the gear 200. In addition, the oil tray 420 may be formed such that a lower end comes into contact with an upper end of the output gear 230. Accordingly, the cooling oil O churned from the output gear 230 may flow into the oil tray 420. In this case, in consideration of rotation and movement regions of the output gear 230, a flow rate of the cooling oil O inside the motor housing 300 may be adjusted, and the structure of the motor housing 300 may be designed so that a water surface level of the cooling oil O is positioned below the center of the output gear 230 when the motor 100 is stopped.

According to the oil- and air-cooling system of the present disclosure having the above configuration, it is possible to complement cooling performance while ensuring packaging efficiency by employing a combination of oil-cooling and air-cooling methods.

More specifically, by implementing the oil circulation structure that, without the use of a separate pump or structure, transfers oil upward through gear churning, allows the oil to be cooled by air at the top, and then recirculates the cooled oil back to the bottom of a gear, it is possible to achieve high cooling performance and ensuring compact packaging and reducing manufacturing costs with a simplified structure, and by implementing speed-dependent flow rate control, it is possible to reduce efficiency losses due to churning in high-speed ranges.

The technical spirit of the present disclosure should not be construed as limited to the above-described embodiments. Not only the scope of applications is diverse, but also various modifications may be made by those skilled in the art without departing from the gist of the present disclosure as claimed in the claims. Accordingly, these improvements and changes fall within the scope of the present disclosure as long as they are obvious to those skilled in the art.

### DESCRIPTION OF REFERENCE NUMERALS

1000: oil- and air-cooling system
100: motor
200: gear
210: input gear
220: compound gear
230: output gear
300: motor housing
310: drive module accommodation housing
320: oil drop channel
400: air-cooling assembly
410: heat exchange surface
420: oil tray
430: oil collection hole
440: drain hole
W: wheel
O: cooling oil
O1: height of oil surface of cooling oil when stopped
G: external air

## Claims

1. An oil- and air-cooling system comprising:
a motor configured to generate power to rotate a drive shaft;
a gear configured to transmit the power of the motor to a wheel;
a motor housing into which the motor and the gear are inserted and in which cooling oil is stored; and
an air-cooling assembly which is provided within the motor housing and in which a predetermined heat exchange surface is shared with one surface of the motor housing and heat-exchanges with external air on the heat exchange surface.

2. The oil- and air-cooling system of claim 1, wherein the motor housing includes a drive module accommodation housing in which the motor and the gear are inserted into a lower end portion thereof and in which the cooling oil is stored,
the gear churns the cooling oil stored within the drive module accommodation housing toward the air-cooling assembly, and
the air-cooling assembly includes an oil tray which is provided in contact with one inner wall of the motor housing, includes a predetermined internal mounting space, and in which the cooling oil churned by the gear is stored.

3. The oil- and air-cooling system of claim 2, wherein the oil tray is provided on an upper end of the drive module accommodation housing, the heat exchange surface is an upper surface of the motor housing, and
the air-cooling assembly includes an oil collection hole formed to pass through one surface of the oil tray rather than the heat exchange surface.

4. The oil- and air-cooling system of claim 3, wherein the oil collection hole is formed at a position corresponding to an edge of a compound gear included in the gear, and
the oil tray is formed on both sides of an input gear included in the gear.

5. The oil- and air-cooling system of claim 4, wherein the oil tray is formed such that a lower end comes into contact with an upper end of the compound gear.

6. The oil- and air-cooling system of claim 3, wherein the oil collection hole is formed at a position corresponding to an edge of an output gear included in the gear, and
the oil tray is formed on both sides of an input gear included in the gear.

7. The oil- and air-cooling system of claim 6, wherein the oil tray is formed such that a lower end comes into contact with an upper end of the output gear.

8. The oil- and air-cooling system of any one of claims 2 to 7, wherein the air-cooling assembly further includes a drain hole formed to pass through one surface of the oil tray rather than the heat exchange surface and the surface in which the oil collection hole is formed.

9. The oil- and air-cooling system of claim 8, wherein the motor housing further includes an oil drop channel communicating with the drain hole at a rear of the drive module accommodation housing, and
a lower end of the oil drop channel communicates with the drive module accommodation housing.

10. The oil- and air-cooling system of any one of claims 1 to 9, wherein an area A of the heat exchange surface conforms to following Equations 1 to 3: Equation 1: ${Q}_{air} = hA \left({T}_{motor}-{T}_{air}\right)$ Equation 2: $\begin{matrix}{Q}_{oil} = {mC}_{p} \left({T}_{motor}-{T}_{oil}\right) \\ {Q}_{air} \geq {Q}_{oil}\end{matrix}$
wherein *Qₐᵢᵣ* denotes a heat exchange capacity when air-cooled,
*Qₒᵢₗ* denotes a heat exchange capacity when oil-cooled,
h denotes a heat transfer efficiency,
A denotes an area of the heat exchange surface,
*Tₘₒₜₒᵣ* denotes a temperature of the motor or the gear,
*Tₐᵢᵣ* denotes an air temperature,
*Tₒᵢₗ* denotes a cooling oil temperature,
m denotes mass of the motor or the gear immersed in cooling oil, and
*Cₚ* represents a specific heat of the motor or the gear.
